# EUROPÄISCHE PATENTSCHRIFT

(11) **EP 1 423 298 B1**
(45) Veröffentlichungstag und Bekanntmachung des Hinweises auf die Patenterteilung: **07.06.2006**
(21) Anmeldenummer: 02769907.3
(22) Anmeldetag: 06.09.2002
(51) Int. Cl.: B60Q 1/48

(54) **ELEKTRONISCHE ABSTANDSWARNANLAGE**
ELECTRONIC DISTANCE WARNING SYSTEM
SYSTEME DE SIGNALISATION DE DISTANCE ELECTRONIQUE

(30) Priorität: 07.09.2001 DE 20114855 U; 08.03.2002 DE 10210101
(43) Veröffentlichungstag der Anmeldung: 02.06.2004
(73) Patentinhaber: Voit, Stefan, Dipl.-Wirtsch.-Ing., 66386 St. Ingbert (DE)
(72) Erfinder: Voit, Stefan, Dipl.-Wirtsch.-Ing., 66386 St. Ingbert (DE)
(74) Vertreter: Vièl, Christof
(86) Internationale Anmeldenummer: PCT/DE2002/003289
(87) Internationale Veröffentlichungsnummer: WO 2003/022628

(56) Entgegenhaltungen:
- DE-A- 19 646 375
- US-A- 5 373 482
- US-A- 5 914 652
- US-A- 6 072 391
- US-B1- 6 227 501

## Beschreibung

Die Erfindung betriff eine elektronische Abstandswarnanlage, insbesondere Einparkhilfe, für die Nachrüstung bei Fahrzeugen, mit front- und/oder heckseitigen Sensoren zur Überwachung eines bestimmten Raumes, mit einem Steuergerät und mit Mitteln zur Verkabelung der Sensoren und des Steurgerätes und mit akustischen Warnelementen, wobei die Sensoren in einem Trägerelement im vorderen und/oder hinteren Fahrzeugbereich angeordnet sind.

Derartige Abstandswarnanlagen sind bekannt, beispielsweise aus der DE 100 03 616 A1.

Häufig werden Abstandswarnanlagen in neuen Fahrzeugen ab Werk eingebaut, wobei die Sensoren in der Regel in die Stoßfänger integriert werden. Neben optischen Warnelementen im Sichtbereich des Fahrers sind in der Regel auch akustische Warnelemente vorgesehen. Allerdings sind derartige Abstandswernanlagen relativ kostspielig und eine Nachrüstung eines. Fahrzeuges mit einer solchen Abstandswärnanlage ist mit vertretbarem Aufwand kaum realisierbar.

Aus der DE 295 14 521 U1 ist eine Vorrichtung zur Abstandsanzeige zwischen Kraftfahrzeugen bekannt, bei der die Sensoren im Bereich der Nummemschildhalterung oder seitlich des Nummernschildes befestigt werden. Zu dem Ort der Anbringung des Steuergerätes und der akustischen bzw. optischen Warnelemente werden keine Ausführungen gemacht.

Die aus der DE 196 46 375 A1 bekannte Äbstandsmeß- und Wamvorrichtung wird im Bereich der Heckblende bzw. -leuchte eingebaut. Hierbei ist zwar auch der nachträgliche Einbau vorgesehen, jedoch erfordert diese Vorgehensweise eine Anpassung an die Heckblende bzw. -leuchte des jeweiligen Fahrzeugs, was einer günstigen Massenfertigung zuwiderläuft. Zudern sind bei dieser Vorrichtung innerhalb der Heckleuchte bzw. einer separaten Kammer derselben alle für eine Abstandsmeß- bzw. -wärneinrichtung erforderlichen Elemente bzw. Bauteile untergebracht, insbesondere auch ein Lautsprecher als akustische Signalvorrichtüng. Dies ist jedoch unvorteilhaft, da bei dem häufig herrschenden Verkehrslärm eine derartige Signalvorrichtung allenfalls bei geöffnetem Fenster vom Fahrer des Fahrzeuges vernommen werden kann, was beispielsweise im Winter oder bei Regen nachteilig ist.

Die in der US 6,072,391 A beschriebene Abstandswarnvorrichtung arbeitet mit optischen Warnelementen, deren nachträglicher Einbau im Sichtbereich des Fahrers aufwendig ist.

Die US 6,227,501 B1 beschreibt eine Sensoranordnung für eine Abstandswarnvorrichtung, bei der die Sensoren in Ausnehmungen in der Stoßstange des Fahrzeuges angeordnet sind. Dies ist insofern nachteilig, als hierbei bei der Montage eine bleibende Veränderung des Fahrzeuges erfolgen muß, was dem nachträglichen Einbau beispielsweise bei Leasingfahrzeugen zuwiderläuft. Die Sensoren sind von den übrigen Komponenten räumlich getrennt, was einen erhöhten Montageaufwand mit sich bringt.

Gemäß der US 5,914 652 A wird das Steuergerät einer im Bereich des Fahrzeugkennzeichens angeordneten Abstandswarnvorrichtung im Fahrzeuginnem montiert, was einerseits eine aufwendige Kabelführung mit sich bringt und andererseits eine bleibende Veränderung des Fahrzeuginnem mit sich bringt.

Die US 5,844,471 A beschreibt eine Abstandswarnvorrichtung zur Integration in Stoßfänger eines Fahrzeuges, wobei die Warnelemente zusammen mit einem Betätigungsschalter für die Abstandswarnanlage und einem Zeitglied als im Bereich des Fahrzeuges anzuordnende Elemente ausgebildet sind.

Aufgabe der Erfindung ist es daher, eine Abstandswarnanlage zu schaffen, die einfach aufgebaut und möglichst schnell nachträglich an einem Fahrzeug montierbar ist.

Diese Aufgabe wird erfindungsgemäß dadurch gelöst, daß das Trägerelement, in dem das Steuergerät angeordnet ist, im Bereich des vorderen und/oder hinteren Fahrzeugkennzeichens befestigbar ist und eine Aufnahme für ein um eine horizontale Achse schwenkbares Gehäuse aufweist, in dessen äußeren Endbereichen die Sensoren angeordnet sind und daß die akustischen Warnelemente in dem Kofferraum oder dem Innenraum des Fahrzeuges angeordnet sind.

Diese Art der Anordnung ist zum einen eine an relativ geschützter Stelle, da häufig das Fahrzeugkennzeichen gegenüber den Fahrzeugkonturen zurückgesetzt ist und somit die Gefahr einer Beschädigung der Abstandswaznanlage gegenüber einer Anbringung im Bereich der Stoßfänger vermindert ist und zum anderen kann die Befestigung beispielsweise in den Bohrungen für das Fahrzeugkennzeichen erfolgen, womit praktisch kein zusätzlicher Montageaufwand entsteht. Das Fahrzeugkennzeichen wird dann lediglich in dem Trägerelement durch Klemmung befestigt.

Da bei der erfindungsgemäßen Ausführung auch das Steuergerät in dem Trägerelement angeordnet ist, entfällt eine Unterbringung desselben in einem anderen Bereich des Fahrzeuges, welche erfordern würde, eine Verkabelung zwischen den Sensoren und dem Trägerelement sowie eine Befestigung für das Steuerelement vorzusehen, so daß die Montage, insbesondere die nachträgliche Montage an einem Fahrzeug, extrem vereinfacht wird.

Zudem sind die Sensoren räumlich bei dem Steuergerät angeordnet, so daß eine kompakte Bauweise vorliegt.

Durch die Schwenkbarkeit um eine horizontale Achse wird es möglich, bei der Montage der Vorrichtung durch Verschwenken des Gehäuses die optimale Stellung der Sensoren zu ermitteln und eine Justierung der Vorrichtung entsprechend der jeweiligen Gegebenheiten (insbesondere Höhe über dem Boden) vorzunehmen. Die Sensoren sind vorzugsweise horizontal zweckmäßigerweise in einem festen Winkel (z.B. 5°) nach außen eingestellt, so daß nur der vertikale Einstellwinkel bei der Montage einzustellen ist.

Hierbei ist es zweckmäßig, daß das Gehäuse um ± 20° um die Nullstellung schwenkbar ist.

Diese Schwenkbarkeit hat sich in den meisten Fällen als ausreichend herausgestellt.

Eine Weiterbildung der Erfindung besteht darin, daß ein Rastelement zum Feststellen des Gehäuses vorgesehen ist.

Dies ermöglicht es, nach Vornahme der Einstellung den als optimal ermittelten vertikalen Schwenkwinkel zu fixieren.

Da die Sensoren in den äußeren Endbereichen des Gehäuses angeordnet sind, kann ein großer Bereich von den Sensoren erfaßt werden.

Zweckmäßig ist hierbei, daß die akustischen Warnelemente als Piezoelemente ausgebildet sind.

Weiterhin ist es vorteilhaft, daß das Steuergerät mit der Stromversorgung der Rückfahrleuchte des Fahrzeuges verbünden ist.

Auf diese Weise kann die Abstandswarnanlage, wenn diese lediglich an der Fahrzeugrückseite installiert ist (wo dies am wichtigsten ist) durch das Einlegen des Rückwärtsganges (mit dem das Anschalten der Rückfahrleuchte einher geht) aktiviert werden.

Weiterhin liegt es im Rahmen der Erfindung, daß auch optische Warnelemente vorgesehen sind.

Schließlich besteht eine Weiterbildung der Erfindung darin, daß die akustischen und / oder optischen Warnelemente zusammen mit einem Betätigungsschalter für die Abstandswarnanlage und einem Zeitglied als im Bereich des Fahrers des Fahrzeuges anzuordnende Elemente ausgebildet sind.

Die Vorteile der Erfindung bestehen im wesentlichen darin, daß eine einfach aufgebaute und daher kostengünstige Abstandswarnanlage geschaffen wird, mit der Fahrzeuge sehr schnell auch von Laien nachgerüstet werden können.

Im folgenden wird die Erfindung anhand eines Ausführungsbeispiels näher erläutert.

Es zeigen
- Fig. 1a: eine Draufsicht auf eine erfindungsgemäße Vorrichtung,
- Fig. 1b: eine Seitenansicht einer erfindungsgemäßen Vorrichtung,
- Fig. 2: eine geschnittene Seitenansicht einer erfindungsgemäßen Vorrichtung.

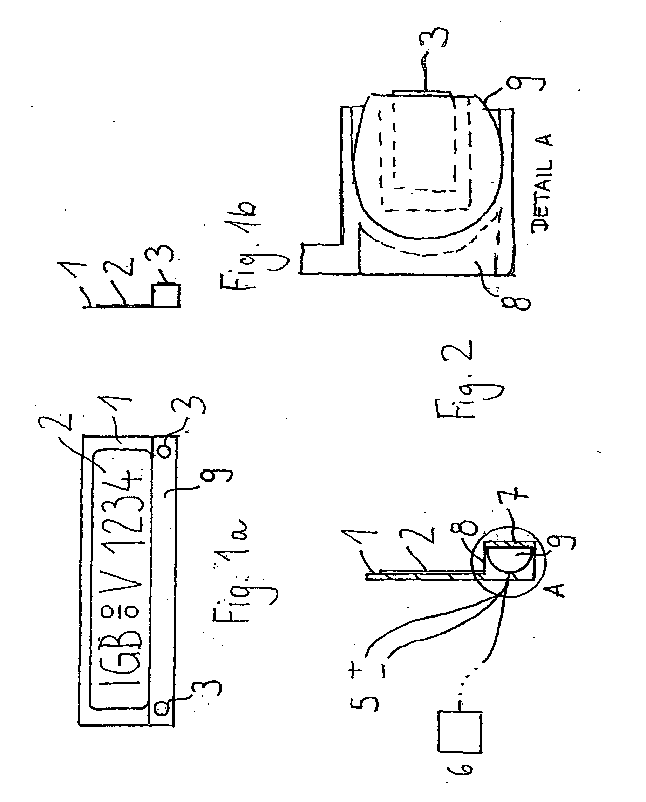

Wie aus den Fig. 1a, 1b und 2 zu erkennen ist, besteht die erfindungsgemäße Abstandswarnanlage aus einem Trägerelement 1, das in dem Bereich des Fahrzeugkennzeichens 2 angeordnet ist und das zumindest in Teilbereichen seitlich über das Fahrzeugkennzeichen 2 hinausragt, z.B. um eine Werbeaufschrift zu tragen. Auf diesem Trägerelement 1 ist an der unteren Längsseite eine Aufnahme 8 für ein Gehäuse 9, angeordnet, in dessen rechtem und linken Endbereich jeweils ein Sensor 3 zur Überwachung des vor bzw. hinter dem Fahrzeug angeordneten Raumes angeordnet ist. Diese Sensoren 3 sind mit einem ebenfalls in dem Gehäuse 9 angeordneten Steuergerät 4 verbunden, mit Hilfe dessen die Meßwerte der Sensoren 3 ausgewertet werden.

Es ist zu erkennen, daß sowohl die Aufnahme 8 als auch das Gehäuse 9 halbkreisförmig ausgebildet sind, wobei das Gehäuse 9 in der Aufnahme 8 um einen Winkel von ca. ± 20° um die Nullstellung schwenkbar ist, was eine Einstellung des für das jeweilige Fahrzeug idealen vertikalen Schwenkwinkels der in dem Gehäuse 9 angeordneten Sensoren 3 ermöglicht. Der horizontale Winkel der Sensoren 3 ist bereits ab Werk auf einen festen Wert eingestellt (z.B. 5° nach außen). Anschließend wird die Schwenkbarkeit des Gehäuses 9 in der Aufnahme 8 durch ein Rastelement blockiert und das Gehäuse 9 mit einer Abdeckplatte 7, die mit einem Werbeaufdruck versehen sein kann, verschlossen.

Das Steuergerät 4 verfügt über einen Anschluß 5 an das Stromnetz des Fahrzeuges und ist mit akustischen und/oder optischen Warnelementen 6 verbunden, die vorzugsweise im Innern des Fahrzeuges angeordnet sind. Bei akustischen Warnelementen 6, die beispielsweise als Piezoelement 6 ausgebildet sein können, reicht die Unterbringung im Kofferraum des Fahrzeuges aus (Befestigung beispielsweise mit Haft- bzw. Klettelementen), wohingegen optische Warnelemente im Sichtbereich des Fahrers angeordnet werden müssen.

Mit der erfindungsgemäßen Abstandswarnanlage kann in einfacher und kostengünstiger Weise ein Fahrzeug insbesondere an der Fahrzeugrückseite, wo dies besonders wichtig ist, nachgerüstet werden, indem das Trägerelement 1 (mit den Sensoren 3 und dem Steuergerät 4) gleichzeitig mit dem Fahrzeugkennzeichen 2 an dem Fahrzeug befestigt wird, der Anschluß 5 des Steuergerätes 4 mit der Rückfahrleuchte des Fahrzeuges verbunden wird und ein akustisches Warnelement 6 in dem Kofferraum befestigt wird. Eine derartige Installation erfordert nur einen minimalen Mehraufwand gegenüber der ohnehin erforderlichen Montage des Fahrzeugkennzeichens und bietet dennoch die wesentlichen Vorteile einer Abstandswarnanlage, nämlich beim Rückwärtsfahren ein Auffahren auf ein Hindernis zu vermeiden.

Gegebenenfalls kann auch im Frontbereich des Fahrzeuges eine entsprechende Abstandswarnanlage installiert werden, so daß auch beim Vorwärtsfahren eine Beschädigung des Fahrzeuges vermieden wird. Insbesondere in diesem Fall ist es zweckmäßig, daß das optische oder akustische Warnelement 6 mit einem Betätigungsschalter mit Zeitglied versehen im Bereich des Fahrers angeordnet wird, da in diesem Falle eine Kopplung an die Rückfahrleuchte keinen Sinn ergibt. Der Fahrer kann dann die Abstandswarnanlage durch den Betätigungsschalter aktivieren, wodurch das Zeitglied zu laufen beginnt. Während der Laufzeit des Zeitgliedes, die einstellbar sein kann, ist die Abstandswarnanlage betriebsbereit und wird bei Erreichen der eingestellten Maximalzeit automatisch deaktiviert.

Das Gehäuse 9 kann neben dem Steuergerät 4 auch weitere Einheiten aufnehmen, z.B. eine Kennzeichenbeleuchtung, eine Antenne oder einen Transponder für die Entrichtung von Maut.

## Patentansprüche

1. Elektronische Abstandswarnanlage, insbesondere Einparkhilfe, für die Nachrüstung von Fahrzeugen, mit front- und/oder heckseitigen Sensoren zur Überwachung eines bestimmten Raumes, mit einem Steuergerät und mit Mitteln zur Verkabelung der Sensoren und des Steuergerätes und mit akustischen Warnelementen, wobei die Sensoren in einem Trägerelement im vorderen und/oder hinteren Fahrzeugbereich anordbar sind, **dadurch gekennzeichnet, daß** das Trägerelement (1), in dem das Steuergerät (4) angeordnet ist, im Bereich des vorderen und/oder hinteren Fahrzeugkennzeichens befestigbar ist und eine Aufnahme (8) für ein um eine horizontale Achse schwenkbares Gehäuse (9) aufweist, in *dessen äußeren Endbereichen* die Sensoren (3) angeordnet sind und daß die akustischen Warnelemente (6) in dem Kofferraum oder dem Innenraum des Fahrzeuges anordbar sind.

2. Elektronische Abstandswarnanlage gemäß Anspruch 1, **dadurch gekennzeichnet, daß** das Gehäuse (9) um ± 20° um die Nullstellung schwenkbar ist.

3. Elektronische Abstandswarnanlage gemäß Anspruch 2, **dadurch gekennzeichnet, daß** ein Rastelement zum Feststellen des Gehäuses (9) vorgesehen ist.

4. Elektronische Abstandswarnanlage gemäß Anspruch 1, **dadurch gekennzeichnet, daß** die akustischen Warnelemente (6) als Piezoelemente ausgebildet sind.

5. Elektronische Abstandswarnanlage gemäß Anspruch 1, **dadurch gekennzeichnet, daß** das Steuergerät (4) mit der Stromversorgung der Rückfahrleuchte des Fahrzeuges verbunden ist.

6. Elektronische Abstandswarnanlage gemäß Anspruch 1, **dadurch gekennzeichnet, daß** auch optische Warnelemente (6) vorgesehen sind.

7. Elektronische Abstandswarnanlage gemäß Anspruch 1 oder Anspruch 6, **dadurch gekennzeichnet, daß** die akustischen und/oder optischen Warnelemente (6) zusammen mit einem Betätigungsschalter für die Abstandswarnanlage und einem Zeitglied als im Bereich des Fahrers des Fahrzeuges anzuordnende Elemente ausgebildet sind.

## Claims

1. Electronic distance warning system, especially a parking assistance system for the retrofitting of vehicles, consisting of front and/or rear sensors for monitoring a defined area, also comprising a control device and means for wiring the sensors and the control device, further comprising acoustic warning elements, in which system the sensors can be located in a support element in the front and/or rear area of the vehicle, **characterised in that** the support element (1), in which the control device (4) is located, can be mounted in the vicinity of the front and/or rear number plate and has a receiving element (8) for a housing (9) that is rotatable about a horizontal axis and that has the sensors (3) located *in its outer end areas,* and **in that** the acoustic warning elements (6) can be located in the boot or the interior of the vehicle.

2. Electronic distance warning system according to claim 1, **characterised in that** the housing (9) is rotatable by ± 20° about the zero position.

3. Electronic distance warning system according to claim 2, **characterised in that** a snap-in detent is provided for locking the housing (9) in position.

4. Electronic distance warning system according to claim 1, **characterised in that** the acoustic warning elements (6) are engineered as piezoelectric elements.

5. Electronic distance warning system according to claim 1, **characterised in that** the control device (4) is connected up to the power supply for the vehicle's reversing light.

6. Electronic distance warning system according to claim 1, **characterised in that** optical warning elements (6) are also provided.

7. Electronic distance warning system according to claim 1 or claim 6, **characterised in that** the acoustic and/or optical warning elements (6), together with an actuating switch for the distance warning system and a timer, are engineered as elements to be located in the vicinity of the vehicle's driver.

## Revendications

1. Système électronique d'alarme de distance, notamment assistance au stationnement, pour l'équipement postérieur de véhicules, avec des détecteurs placés sur la face et/ou sur l'arrière pour contrôler un certain espace, avec un appareil de commande et des moyens pour le câblage des détecteurs et de l'appareil de commande et avec des éléments d'alarme acoustique, les détecteurs étant disposés dans un élément porteur pouvant être situé dans la zone avant et/ou la zone arrière du véhicule, **caractérisé en ce que** l'élément porteur (1) dans lequel est disposé l'appareil de commande (4) peut être fixé dans la zone de la plaque d'immatriculation avant et/ou arrière et est muni d'un évidement (8) pour un boîtier (9) pouvant être basculé autour d'un axe horizontal et dans la zone d'extrémité extérieure duquel sont disposés les détecteurs (3) et **en ce que** les éléments d'alarme acoustique (6) peuvent être disposés dans le coffre ou dans l'habitacle du véhicule.

2. Système électronique d'alarme de distance selon la revendication 1, **caractérisé en ce que** le boîtier (9) peut être basculé de ± 20° autour de la position de référence.

3. Système électronique d'alarme de distance selon la revendication 2, **caractérisé en ce qu'**un élément d'encliquetage est prévu pour fixer le boîtier (9).

4. Système électronique d'alarme de distance selon la revendication 1, **caractérisé en ce que** l'élément d'alarme acoustique (6) prend la forme d'un élément piézo.

5. Système électronique d'alarme de distance selon la revendication 1, **caractérisé en ce que** l'appareil de commande (4) est relié à l'alimentation en courant des feux de recule du véhicule.

6. Système électronique d'alarme de distance selon la revendication 1, **caractérisé en ce que** des éléments d'alarme optiques (6) sont également prévus.

7. Système électronique d'alarme de distance selon la revendication 1 ou 6, **caractérisé en ce que** les éléments d'alarme acoustiques et/ou optiques (6) avec un interrupteur de mise en marche pour le système électronique d'alarme et un système temporisé prennent la forme d'un élément à disposer à proximité du conducteur.
